# EUROPÄISCHE PATENTSCHRIFT

(11) **EP 2 883 647 B1**
(45) Veröffentlichungstag und Bekanntmachung des Hinweises auf die Patenterteilung: **29.05.2019**
(21) Anmeldenummer: 13196912.3
(22) Anmeldetag: 12.12.2013
(51) Int. Cl.: B23K 26/30, B23K 26/03, B23K 26/00, B23K 26/20, B23K 26/36, G05B 19/18

(54) **Verfahren zur Konfiguration einer Laserbearbeitungsvorrichtung**
Method for configuring a laser machining device
Procédé de configuration d'un dispositif d'usinage au laser

(43) Veröffentlichungstag der Anmeldung: 17.06.2015
(73) Patentinhaber: Bystronic Laser AG, 3362 Niederönz (CH)
(72) Erfinder: Beutler, Beat, 3363 Oberönz (CH)
(74) Vertreter: Patentbüro Paul Rosenich AG

(56) Entgegenhaltungen:
- EP-A1- 2 169 491
- DE-A1-102008 052 592

## Beschreibung

Die Erfindung betrifft ein Verfahren zur Konfiguration einer Laserbearbeitungsvorrichtung nach dem Oberbegriff des Anspruchs 1, ein Laserbearbeitungsverfahren nach dem Oberbegriff des Anspruchs 8 und eine Laserbearbeitungsvorrichtung nach dem Oberbegriff des Anspruch 14.

Die WO2011083087A1 offenbart u.a, im Zusammenhang mit Laserschweissen ein kognitives System, bei welchem auf Basis von erlerntem empirischen Wissen ein späterer Verarbeitungsprozess in einer unbekannten Situation durch Anpassung dieses erlernten Wissens autonom vom System durchgeführt wird. Dazu werden Sensor-Informationen über die anfängliche Verarbeitung eines ursprünglichen Werkstücks abstrahiert und genutzt. Im Rahmen eines ersten Testlaufes kann Expertenwissen genutzt werden, um das System zu lehren,

Die CN102855326A offenbart ein Verfahren zum Managen von Laserschneidparametern. Dabei werden Algorithmen und Korrelations-Analysen eingesetzt, um eine Optimierung der Laserschneidqualität zu erhalten.

Die WO2012000995A1 offenbart ein Dialogsystem zur Untersuchung eines auf einer Werkzeugmaschine durchgeführten Bearbeitungsprozesses, um einen Vorschlag zum Verbessern zumindest eines Qualitätsmerkmales eines nachfolgenden Bearbeitungsprozesses zu ermitteln. Das Dialogsystem umfasst ein Vorschlags-Modul, welches unter Zugriff auf hinterlegtes Expertenwissen einen Vorschlag erstellt. Dabei werden durch eine Werkzeugmaschinensensorik ermittelte Daten oder Bilddaten eines bearbeiteten Werkstückes eingelesen.

Die EP0991493B1 offenbart ein Unterstützungssystem für eine Laserstrahlmaschine mit einem Eingabegerät, das es dem Bediener ermöglicht, mehrere Auswertungsparameter betreffend eines Bearbeitungszustandes eines Werkstückes einzugeben. Unter Verwendung einer Künstliche-Intelligenz-Furiktion' können Schätzwerte für Bearbeitungszustandsparameter erzeugt werden. Dabei kann jener Parameter ausgewählt werden, der am effektivsten ist, den zuvor eingegebenen Bearbeitungszustand zu verändern.

Die DE102008052592A1 offenbart eine Vorrichtung zur Steuerung einer Bearbeitungsanlage. In einem Datenspeicher sind standardmäßige Bearbeitungsprogramme gespeichert, auf welche ein Steuerprogramm zugreift. Mit einer Anpasseinrichtung können die Bearbeitungsparameter In einer voreingestellten Weise an die Materialeigenschaften eines zu bearbeitenden Werkstückes und/oder an eine auswählbare Zielgröße der Bearbeitung angepasst werden. Diese Druckschrift offenbart weiters, dass in Technologietabellen in Abhängigkeit der Materialart, der Materialdicke und dem Bearbeitungsverfahren geeignete Bearbeitungsparameter für alle relevanten Größen hinterlegt sind, die eine prozesssichere Bearbeitung ermöglichen. Die Anpasseinrichtung erlaubt nur eine beschränkte Anpassung von Parametern; ein solches System erfordert nach wie vor umfangreiches Fachwissen und ständige Aufmerksamkeit einer Bedienperson, insbesondere, wenn sich die Art der Laserbearbeitung ändert.

Die EP2169491A1 offenbart ein Unterstützungssystem zur Optimierung von bearbeitungs- und/oder Regelparametern.

Der Nachteil dieser bekannten Lösungen besteht insbesondere darin, dass der Bediener mit einer Vielzahl an Prozessparametern konfrontiert ist, deren Einstellung zur Erzielung einer qualitativ hochwertigen Bearbeitung in seinem Aufgabenbereich liegt. Dies erfordert nicht nur hohes Expertenwissen, sondern ist zeitaufwendig. Ausserdem sind Fehleinstellungen aufgrund von Verwechslungen von Parametern nicht ausgeschlossen. Die hohe Anzahl an Prozessparametern ergibt sich, weil die Laserbearbeitungsanlagen sehr vielseitig anwendbar sind und stark voneinander unterschiedliche Applikationen erledigen können. Für die Bearbeitung ein und desselben Werkstückes werden je nach Bearbeitungsmode (z.B. kontinuierliche Laserstrahlung, gepulste Laserstrahlung, Gravieren, Anschneiden, etc.) für denselben Parametertyp unterschiedliche Werte zugrunde gelegt.

Ein weiterer Nachteil dieser bekannten Lösungen besteht insbesondere darin, dass eine individuelle Einstellung von optimalen Prozessparametern durch das Bedienpersonal nicht möglich ist. Die Prozessparameter werden während des Laserbearbeitungsvorganges verändert, ohne dass das Bedienpersonal Einfluss nehmen könnte bzw. die Anpassung der Prozessparameter kontrollieren oder auf ihre Plausibilität überprüfen könnte. Je nach Anwendungsfall können ausserdem mehrere unterschiedliche Werte für Prozessparameter oder Kombinationen von Prozessparametern in Frage kommen. Eine Abstimmung auf den konkreten Fall, das Werkstück bzw. die Art der beabsichtigen Bearbeitung ist daher nicht möglich. Auch zunehmende Verschmutzung der Laseroptik, Verschleiss von Bauteilen und das 'Wegdriften' von Reglern kann mit solchen Systemen nicht berücksichtigt werden, sodass in solchen Situationen keine optimalen Ergebnisse erzielt werden.

Aufgabe der vorliegenden Erfindung ist es somit, diese Nachteile zu beseitigen und ein Konfigurationsverfahren sowie ein Laserbearbeitungsverfahren bzw. -vorrichtung bereitzustellen, mit dem/der die Einstellung von Prozessparametern wesentlich erleichtert und zuverlässiger gestaltet wird. Der Zeitaufwand für die Konfiguration einer Laserbearbeitungsvorrichtung soll merklich reduziert werden, eine Fehleinstellung ausgeschlossen werden.

Bezüglich einer Ausführungsform sollen in allen (auch unvorhergesehen) Situationen optimale Prozessparameter verwendet werden können. Das System soll sich durch hohe Flexibilität auszeichnen und dem Bedienpersonal das Treffen richtiger Entscheidungen ermöglichen, um eine optimierte Bearbeitungsqualität zu erhalten. Mit (unerwünschten) Einflüssen, die vom System selbst nicht erkannt werden oder grundsätzlich nicht erkennbar sind, soll durch Verwendung eines erfindungsgemässen Systems richtig umgegangen werden können.

Diese Aufgabe wird mit dem eingangs genannten Konfigurationsverfahren dadurch gelöst, dass die Laserbearbeitungsvorgänge unterschiedlicher Art in eine Klassifikation eingeteilt sind, in der jedem Laserbearbeitungsvorgang ein Satz von Prozessparametern zugeordnet ist, die bei der Ausführung des betreffenden Laserbearbeitungsvorganges zur Anwendung kommen, wobei bei einer Festlegung und/oder Veränderung zumindest eines ersten Prozessparameters eines Laserbearbeitungsvorganges automatisch zumindest ein Prozessparameter eines anderen, in der Klassifikation enthaltenen Laserbearbeitungsvorganges gemäss zumindest einer hinterlegten Regel in Abhängigkeit des ersten Prozessparameters festgelegt und/oder verändert wird.

Durch diese Massnahme wird die Konfiguration bzw. Einstellung der Prozessparameter im Wesentlichen automatisiert, wodurch die Bedienung stark vereinfacht wird.

Für Werkstücke derselben Dicke und/oder desselben Materials lässt sich dadurch auf besonders einfache Weise jeweils ein kompletter Satz an Prozessparametern generieren. Wenn z.B. die Prozessparameter für den ununterbrochenen Geradeausschnitt mit kontinuierlicher Laserleistung festgelegt bzw. verändert werden, werden ausgehend von diesen Werten automatisch auch jene Prozessparameter festgelegt bzw. verändert die anderen Bearbeitungsmoden zugrunde gelegt werden. Dies können sein: Schneiden gepulster Konturen, Gravieren, Abdampfen, Schneiden kleiner Konturen mit kontinuierlicher Laserleistung, Anfahren an die Kontur, Scanning und Weitere.

Wiederum andere Parameter sind für das Einstechen, Gravieren, Anschneiden und/oder Abdampfen zu verwenden. Es hat sich gezeigt, dass für eine optimale Bearbeitung von Werkstücken derselben Art (Dicke, Material, Form, etc.) mit unterschiedlichen Bearbeitungsmoden die jeweiligen Prozessparameter in Beziehung zueinander stehen. Diese Beziehungen sind der vorliegenden Erfindung zugrunde gelegt, indem hinterlegte Regeln diese Beziehungen abbilden.

Der Ausdruck 'Klassifikation' ist breit zu verstehen und bedeutet in seiner allgemeinsten Form eine Zuordnung von Prozessparametern jeweils zu bestimmten Laserbearbeitungsvorgängen. Möglich ist z. B. die Verwendung einer tabellenähnlichen Struktur der Prozessparameter (z. B. Schneidparameter). Die Zeilen beschreiben die Art des Parameters, wie z.B. Schneidgeschwindigkeit, Fokuslage, Laserleistung, etc. Die Spalten sind für verschiedene Prozessarten (im weiteren: Laserbearbeitungsvorgänge unterschiedlicher Art) reserviert.

Im Folgenden ein Beispiel: Die Tabelle kann z. B. aus ca. 60 Zeilen und 8 Spalten bestehen, was pro Blechdicke und Sorte theoretisch 480 Einstellmöglichkeiten ergibt. Es sind aber nicht alle Parameter für den Kunden gleich wichtig. Und es hat sich gezeigt, dass eine Vielzahl dieser Parameter eine Beziehung zueinander haben. Beispiel: Wenn die Fokuslage in Spalte 1 verändert werden muss, sind alle anderen Fokuslagen in den Spalten 2-8 nach festen Regeln ebenfalls zu ändern. Diese Beziehung kann nun als Expertenwissen (zumindest eine hinterlegte Regel) in der Steuerung hinterlegt werden.

Natürlich wird bevorzugt, wenn eine Vielzahl an Regeln hinterlegt sind, wodurch eine entsprechende Vielzahl an Prozessparametern voneinander abhängen.

Ein Erfindungsaspekt besteht darin, dass zwei Typen von Prozessparametern in der Klassifikation definiert sind: primäre und sekundäre Parameter: Die primären Parameter werden vom Bediener oder von der Laserbearbeitungsvorrichtung nach bestimmten Qualitätskriterien und/oder Sensordaten festgelegt und/oder verändert. Die sekundären Parameter hängen von den primären Parametern ab und werden entsprechend den hinterlegten Regeln festgelegt und/oder verändert.

Die primären Parameter sind die Wichtigen, die oft verändert werden müssen, um das Bearbeitungs- bzw. Schneidergebnis zu optimieren. Bei normalen Anwendungen sind nur etwa 5-10 Parameter als primäre Parameter einzustufen. Die sekundären Parameter haben eine Beziehung zu den primären Parametern. Wird ein primärer Parameter verändert, verändert sich ein oder mehrere sekundäre Parameter nach hinterlegten Regeln. Die Regeln bilden das Expertenwissen ab. Mit dieser Lösung vereinfacht sich die Bedienung der Anlage massiv.

Die hinterlegten Regeln können in der Steuerung oder auf einem externen Speicher abgelegt sein. Die Regeln können auch verändert werden. Ebenso kann die Definition, welcher Prozessparameter als primärer Parameter bzw. sekundärer Parameter ist, verändert werden. Die hinterlegten Regeln können Formeln oder aber auch Konstanten sein.

Die primären und sekundären Parameter sind nicht nur beim Schneidprozess, sondern auch beim Einstechen und weiteren möglichen Anwendungen auf der Laserschneidanlage einsetzbar

Die Steuereinrichtung der Laserbearbeitungsvorrichtung ist derart ausgebildet, dass sie Primär- und Sekundärparameter verwalten kann. Nach einer Änderung eines primären Parameters werden vom hinterlegten Expertensystem, das die Vielzahl an Regeln umfasst, automatisch die sekundären Parameter berechnet und als neue Parameter automatisch auf der Steuereinrichtung und/oder an einem Speicherort gespeichert. Dadurch wird auch sichergestellt, dass Simulationen/Kalkulationen mit den korrekten Werten durchgeführt werden.

Die primären Parameter können auf der Ausgabeeinrichtung der Bedienoberfläche durch Bilder von Werkstücken unterschiedlicher Bearbeitungsqualität verknüpft sein. Der Bediener muss nur sein geschnittenes Teil oder die Schnittfläche oder den Einstich, etc. mit dem Bild auf dem Monitor vergleichen und das Nächstliegende bzw. das am besten Übereinstimmende drücken bzw. auswählen. Dies löst in der Steuerung eine Veränderung eines Primärparameters und via die hinterlegten Regeln auch eine oder mehrere Anpassungen von sekundären Parametern aus. Dadurch wird das Expertenwissen soweit wie möglich dem Bediener abgenommen und in die Steuerung verlagert.

Für die Prozessparameter, im speziellen für die Primärparameter können in einem Expertensystem Grenzen hinterlegt sein. Werden diese überschritten, schlägt das System aufgrund von hinterlegtem Expertenwissen Massnahmen vor. Beispiel: Wird die Fokuslage zu stark verändert, weist dies auf eine Verschmutzung der Schneidlinse hin. Daraus erfolgt die Empfehlung an den Bediener, die Linse zu reinigen.

Das Expertensystem der primären und sekundären Parameter kann so ausgebildet sein, dass z. B. eine Sensoreinrichtung aus einer Prozessbeobachtung im Zusammenwirken mit der Steuereinrichtung eine automatische Veränderung von primären Parametern bewirkt. Dadurch verändern sich ein oder mehrere Sekundärparameter automatisch nach den hinterlegten Regeln.

Eine bevorzugte Ausführungsform zeichnet sich dadurch aus, dass die Klassifikation als Laserbearbeitungsvorgänge unterschiedlicher Art zumindest einen Laserbearbeitungsvorgang mit kontinuierlicher Laserstrahlung und einen Laserbearbeitungsvorgang mit gepulster Laserstrahlung umfasst und/oder dass die Klassifikation als Laserbearbeitungsvorgänge unterschiedlicher Art das Anschneiden und/oder Gravieren und/oder Scanning und/oder Abdampfen und/oder kontinuierliches Schneiden kleiner Konturen umfasst.

Eine bevorzugte Ausführungsform zeichnet sich dadurch aus, dass der jedem Laserbearbeitungsvorgang zugeordnete Satz von Prozessparametern die Prozessparameter Fokuslage und/oder Vorschubgeschwindigkeit und/oder Laserleistung und/oder Düsenabstand vom Werkstück umfasst, und/oder dass die zumindest eine hinterlegte Regel vorzugsweise über eine Eingabeschnittstelle veränderbar ist.

Eine bevorzugte Ausführungsform zeichnet sich dadurch aus, dass die Festlegung und/oder Veränderung zumindest eines ersten Prozessparameters durch eine Eingabe an einer Eingabeschnittstelle der Laserbearbeitungsvorrichtung durch eine Bedienperson erfolgt. Ausgehend von der Eingabe betreffend eines primären Parameters werden alle davon abhängenden sekundären Parameter automatisch berechnet und als Datensatz hinterlegt.

Eine bevorzugte Ausführungsform zeichnet sich dadurch aus, dass an einer Ausgabeschnittstelle der Laserbearbeitungsvorrichtung mehrere Bilder von Werkstücken unterschiedlicher Bearbeitungsqualität dargestellt werden, wobei jedes Bild einem bestimmten Wert zumindest eines ersten Prozessparameters zugeordnet ist, und dass die Festlegung und/oder Veränderung des zumindest einen ersten Prozessparameters durch Auswahl eines der Bilder durch eine Bedienperson erfolgt. Dies stellt eine besonders nutzerfreundliche Lösung dar, die sich darüber hinaus durch hohe Zuverlässigkeit im Auffinden eines optimalen (primären) Parameters auszeichnet.

Eine bevorzugte Ausführungsform zeichnet sich dadurch aus, dass die Festlegung und/oder Veränderung zumindest eines ersten Prozessparameters in Abhängigkeit von Sensordaten einer Sensoreinrichtung erfolgt. Die Beurteilung durch einen Bediener wird hier ersetzt bzw. erweitert.

Die Aufgabe wird auch durch ein Laserbearbeitungsverfahren zur Bearbeitung eines Werkstückes mit einem Laserstrahl in einer Laserbearbeitungsvorrichtung gelöst, umfassend die Schritte:
- Konfiguration der Laserbearbeitungsvorrichtung nach einem der vorhergehenden Ausführungsformen,
- Steuern eines Laserbearbeitungsvorganges mit einer Steuereinrichtung unter Anwendung von Prozessparametern.

Eine bevorzugte Ausführungsform ist gekennzeichnet durch die Schritte
- Überwachung des Laserbearbeitungsvorganges und/oder Inspektion des bearbeiteten Werkstückes mit zumindest einer Sensoreinrichtung,
- Erstellung zumindest eines Vorschlages für die Veränderung des zumindest einen ersten Prozessparameters in Abhängigkeit der von der zumindest einen Sensoreinrichtung aufgenommenen Sensordaten und
- Bereitstellung des Vorschlages für die Veränderung des Prozessparameters an einer Ausgabeschnittstelle für das Bedienpersonal.

In dieser Ausführungsform generiert das System zunächst einen Vorschlag für die Veränderung eines Prozessparameters. Dieser Vorschlag kann eine Information über den absoluten Wert eines vom System ermittelten optimalen Prozessparameters oder eine Information über einen relativen Wert, der die Abweichung eines optimalen Prozessparameters vom aktuell eingestellten (d.h. der Steuerung zugrunde liegenden) Prozessparameter enthalten. Ebenso könnte der Vorschlag die Information enthalten, den Prozessparameter zu erhöhen oder zu erniedrigen.

Das Generieren eines Vorschlages erfolgt während eines Laserbearbeitungsvorganges (z.B. nach dem Durchstich oder nach einer ersten Schneidphase). Das Bedienpersonal ist nun frei, den Vorschlag anzunehmen oder einen vom Vorschlag abweichenden Wert für den betreffenden Prozessparameter einzugeben und damit der Steuerung zugrunde zu legen oder überhaupt nichts zu tun, und den Bearbeitungsvorgang mit dem ursprünglich eingestellten Prozessparameter fortzusetzen. Es wird dem Benutzer ermöglicht, qualifiziert in den Prozess eingreifen zu können. Es wird somit die Möglichkeit geschaffen, einen der Steuerung des Laserbearbeitungsvorganges zugrundeliegenden Prozessparameter zu ändern, um optimale Ergebnisse zu erhalten.

Das System stellt dem Bedienpersonal einerseits eine Anleitung zur Verfügung (d.h. Richtwerte, die das System für optimal hält), bietet ihm aber gleichzeitig die Freiheit, Prozessparameter ausgehend vom Vorschlag in abweichender Weise einzustellen. In speziellen Konstellationen, die z.B. besondere Werkstückarten oder -formen, besondere Bearbeitungsergebnisse und/oder unerwünschte Einflüsse wie Verschmutzung der Laseroptik betreffen, kann die Bedienperson eine weitere Optimierung der vorgeschlagenen Werte, z.B. durch Erfahrung und/oder Intuition, vornehmen. Auch ist es denkbar, dass das System mehrere verschiedene Vorschläge für ein und denselben Prozessparameter ermittelt und die Bedienperson einen dieser Vorschläge auswählen und annehmen kann.

Beispiele für veränderbare Prozessparameter, deren Änderung im Rahmen der Anleitungsprozedur vorgeschlagen werden können, sind z.B. Vorschub(Geschwindigkeit) beim Schneiden, Laserleistung beim Schneiden, Fokuslage beim Schneiden, Gasdruck innerhalb des Laserbearbeitungskopfes und Werkzeugradius (Strahlquerschnitt).

Bevorzugt ist das Laserbearbeitungsverfahren ein Schneidverfahren, mit dem Werkstücke entlang einer Schneidlinie ganz oder teilweise durchtrennt werden. Der Laserstrahl wird durch einen Laserschneidkopf zur Verfügung gestellt. Vorteilhafte Weiterbildungen sind in den Figuren und in den abhängigen Patentansprüchen dargelegt.

Eine bevorzugte Ausführungsform zeichnet sich dadurch aus, dass eine Veränderung des Prozessparameters, auf den sich der Vorschlag bezieht, erst dann erfolgt, wenn das Bedienpersonal an einer Eingabeschnittstelle eine dem Vorschlag entsprechende Eingabe oder eine vom Vorschlag abweichende Eingabe für den Prozessparameter durchführt. In ersterem Fall wird der Vorschlag bestätigt, im letzteren Fall gibt das Bedienpersonal einen anderen Wert für den betreffenden Prozessparameter ein. Durch diese Massnahme wird verhindert, dass eine vollautomatische Anpassung des Prozessparameters ohne Überprüfung durch den Nutzer erfolgt.

In einer anderen Variante könnte eine 'Übernahme' des vorgeschlagenen Wertes für den Prozessparameter durch die Steuerung nur dann vollautomatisch erfolgen, wenn der Bedienperson innerhalb eines vorgegebenen Zeitraumes nicht reagiert.

Eine bevorzugte Ausführungsform zeichnet sich dadurch aus, dass die von der zumindest einen Sensoreinrichtung aufgenommenen Sensordaten und/oder daraus abgeleitete Daten mit Referenzdaten verglichen werden und dass die Erstellung zumindest eines Vorschlages für die Veränderung eines Prozessparameters in Abhängigkeit der Abweichung der Sensordaten und/oder daraus abgeleiteter Daten von den Referenzdaten erfolgt. Die Referenzdaten können sich z.B. auf die Schnittqualität beziehen und die gewünschten Schnittspaltbreiten bei vorgegebener Materialdicke und/oder Materialart enthalten.

Eine bevorzugte Ausführungsform zeichnet sich dadurch aus, dass die Erstellung zumindest eines Vorschlages für die Veränderung eines Prozessparameters nur erfolgt, wenn die Abweichung einen vorgegebenen Grenzwert überschreitet. Dadurch wird verhindert, dass bereits kleine und die Qualität nicht beeinträchtigende Abweichungen zur Generierung eines Vorschlages führt.

Eine bevorzugte Ausführungsform zeichnet sich dadurch aus, dass die Erstellung zumindest eines Vorschlages für die Veränderung eines Prozessparameters mittels eines vorzugsweise empirisch ermittelten Datensatzes erfolgt, in dem mögliche Werte der Sensordaten und/oder daraus abgeleiteter Daten mit Werten für den dazugehörigen Prozessparameter verknüpft sind. Der Datensatz steht in der Steuereinrichtung oder einem externen Speicher zur Verfügung. Ein auf der Steuereinrichtung laufendes Anleitungsprogramm hat dabei Zugriff auf diesen Datensatz, dessen Erstellung z.B. durch empirische Ermittlung optimaler Parameter erfolgen kann.

Eine weitere Ausführungsform zeichnet sich dadurch aus, dass die Laserbearbeitungsvorrichtung einen Vorschlag zur Durchführung einer Massnahme, insbesondere einer Reinigungs-, Wartungs- und/oder Reparaturmassnahme generiert, wenn zumindest ein Prozessparameter (z.B. Primärparameter) und/oder zumindest ein die Bearbeitung betreffender Auswerteparameter (Verschmutzungsgrad von Linse und/oder Schutzglas, Schnittspaltbreite, Abweichung von idealer Schnittkontur, Ausfransungen, etc.) eine vorgegebene Grenze überschreitet. Dies erfolgt mittels eines in der Laserbearbeitungsvorrichtung hinterlegten Expertenwissens, in dem für jede Situation die optimalste Vorgehensweise verknüpft ist.

Eine bevorzugte Ausführungsform zeichnet sich dadurch aus, dass der Datensatz verändert wird, wenn eine vom Vorschlag für die Veränderung des Prozessparameters abweichende Eingabe oder eine Reihe abweichender Eingaben durch das Bedienpersonal erfolgt/erfolgen, wobei die Veränderung des Datensatzes in Abhängigkeit der abweichenden Eingabe(n) erfolgt. Dies erlaubt eine Anpassung des Datensatzes bei systematischen Abweichungen von vorgeschlagenen Werten zu optimalen Werten, z. B. im Zuge längerer Betriebsdauer (kontinuierliche Verschmutzung, etc.).

Eine bevorzugte Ausführungsform zeichnet sich dadurch aus, dass die Sensoreinrichtung ausgebildet ist, um Auswirkungen des Laserstrahles auf das Werkstück, insbesondere die Schnittqualität, während des Laserbearbeitungsvorganges zu überwachen, wobei die Sensoreinrichtung vorzugsweise eine Kamera ist.

Eine bevorzugte Ausführungsform zeichnet sich dadurch aus, dass die Sensoreinrichtung ausgebildet ist, um laserwerkzeug-bezogene Parameter während des Laserbearbeitungsvorganges zu überwachen, wobei vorzugsweise die Sensoreinrichtung ein in oder an dem Laserbearbeitungskopf angeordneter Drucksensor oder optischer Sensor ist.

Eine bevorzugte Ausführungsform zeichnet sich dadurch aus, dass zumindest zwei Parameter während des Laserbearbeitungsvorganges von der Sensoreinrichtung überwacht werden und dass der Parameter, auf den sich der Vorschlag bezieht, ein von den zumindest zwei von der Sensoreinrichtung überwachten Parameter verschiedener Parameter ist. Dies erlaubt eine besonders zuverlässige Anpassung und Optimierung eines Prozessparameters, da in diesen die Abhängigkeit von zwei verschiedenen Parametern (z.B. Schnittspaltbreite und Einstichdauer) einfliesst.

Eine bevorzugte Ausführungsform zeichnet sich dadurch aus, dass die Erstellung zumindest eines Vorschlages für die Veränderung eines Prozessparameters in Abhängigkeit der von der zumindest einen Sensoreinrichtung aufgenommenen Sensordaten und die Bereitstellung des Vorschlages für die Veränderung des Prozessparameters an einer Ausgabeschnittstelle für das Bedienpersonal durch ein Anleitungsprogramm erfolgt, das in der Steuereinrichtung der Laserbearbeitungsvorrichtung enthalten ist. Das erfindungsgemässe Prinzip stellt eine Anleitung für das Bedienpersonal dar, optimale Parameter zu finden, und ermöglicht individuell zugeschnittene Lösungsansätze für die Laserbearbeitung.

Die eingangs erwähnte Aufgabe wird auch gelöst durch eine Laserbearbeitungsvorrichtung zur Bearbeitung eines Werkstückes mit einem Laserstrahl, mit einer Steuereinrichtung, wobei mit der Laserbearbeitungsvorrichtung Laserbearbeitungsvorgänge unterschiedlicher Art ausführbar sind, die jeweils von der Steuereinrichtung unter Anwendung von Prozessparametern gesteuert werden, dadurch gekennzeichnet, dass die Laserbearbeitungsvorrichtung eine Klassifikationseinrichtung umfasst, in der die Laserbearbeitungsvorgänge unterschiedlicher Art in eine Klassifikation eingeteilt sind, in der jedem Laserbearbeitungsvorgang ein Satz von Prozessparametern zugeordnet ist, die bei der Ausführung des betreffenden Laserbearbeitungsvorganges zur Anwendung kommen, wobei die Klassifikationseinrichtung derart ausgebildet ist, dass bei einer Festlegung und/oder Veränderung zumindest eines ersten Prozessparameters eines Laserbearbeitungsvorganges automatisch zumindest ein Prozessparameter eines anderen, in der Klassifikation enthaltenen Laserbearbeitungsvorganges gemäss zumindest einer hinterlegten Regel in Abhängigkeit des ersten Prozessparameters festlegbar und/oder veränderbar ist. Die Klassifikationseinrichtung kann ein Konfigurationsmodul, ein Rechner- bzw. Speichermedium oder Bestandteil der Steuereinrichtung sein.

Eine bevorzugte Ausführungsform zeichnet sich dadurch aus, dass die Laserbearbeitungsvorrichtung eine Eingabeschnittstelle und eine Ausgabeschnittstelle für das Bedienpersonal, die mit der Steuereinrichtung verbunden sind, und zumindest eine Sensoreinrichtung zur Überwachung des Laserbearbeitungsvorganges und/oder zur Inspektion eines bearbeiteten Werkstückes umfasst, wobei die Steuereinrichtung zur Anleitung des Bedienpersonals ein Anleitungsprogramm umfasst, das ausgebildet ist, um in Abhängigkeit der von der zumindest einen Sensoreinrichtung aufgenommenen Sensordaten zumindest einen Vorschlag für die Veränderung des zumindest einen ersten Prozessparameters zu erstellen und an der Ausgabeschnittstelle für das Bedienpersonal bereitzustellen.

Diese Ausführungsform beinhaltet somit eine interaktive Anleitung zur Erzielung bester Ergebnisse. Die Steuerung enthält das 'Expertenwissen' in Form von Datensätzen, Datenbanken und/oder Referenzdaten (Erfahrungswerte, Tabellen) und kann daraus einen (aus Sicht des Systems) optimalen Wert für einen Prozessparameter bereitstellen. Das System leitet einen Laien/Bedienpersonal an, zum besten Ergebnis zu kommen.

Das Anleitungsprogramm kann ein Datenverarbeitungsprogramm sein, das auf der Steuereinrichtung läuft, wobei der Ausdruck ,Steuereinrichtung breit zu verstehen ist und alle zum Betrieb der Laserbearbeitungsvorrichtung nötigen Rechner, Module, Hard- und Software umfassen kann, insbesondere auch ausserhalb eines eigentlichen Steuermoduls angeordnete externe Datenverarbeitungsvorrichtungen.

Die Ausgabeschnittstelle ist insbesondere ein Bildschirm oder Touchscreen, könnte aber auch akustischer Natur sein (Lautsprecher). Im Falle eines Bildschirmes kann dieser gerade oder gebogen bzw. gewölbt ausgebildet sein. Letzteres erhöht die Bedienerfreundlichkeit. Die Eingabeschnittstelle ist ebenfalls keinen Beschränkungen unterworfen und kann eine Tastatur, eine Maus, ein Joy-Stick, Spracherkennung, u.v.m. sein.

Eine bevorzugte Ausführungsform zeichnet sich dadurch aus, dass die Steuereinrichtung Referenzdaten umfasst und das Anleitungsprogramm eingerichtet ist, um die von der zumindest einen Sensoreinrichtung aufgenommenen Sensordaten und/oder daraus abgeleiteten Daten mit den Referenzdaten zu vergleichen, wobei die Erstellung zumindest eines Vorschlages für die Veränderung eines Prozessparameters in Abhängigkeit der Abweichung der Sensordaten und/oder daraus abgeleiteter Daten von den Referenzdaten erfolgt.

Eine bevorzugte Ausführungsform zeichnet sich dadurch aus, dass die Steuereinrichtung einen vorzugsweise empirisch ermittelten Datensatz umfasst, in dem mögliche Werte der Sensordaten und/oder daraus abgeleiteter Daten mit Werten für den dazugehörigen Prozessparameter verknüpft sind, und dass das Anleitungsprogramm eingerichtet ist, um die Erstellung zumindest eines Vorschlages für die Veränderung eines Prozessparameters mittels des Datensatzes durchzuführen.

Eine bevorzugte Ausführungsform zeichnet sich dadurch aus, dass die Sensoreinrichtung ausgebildet ist, um Auswirkungen des Laserstrahles auf das Werkstück, insbesondere die Schnittqualität, während des Laserbearbeitungsvorganges zu überwachen, wobei die Sensoreinrichtung vorzugsweise eine Kamera ist.

Eine bevorzugte Ausführungsform zeichnet sich dadurch aus, dass die Sensoreinrichtung ausgebildet ist, um laserwerkzeug-bezogene Parameter während des Laserbearbeitungsvorganges zu überwachen, wobei vorzugsweise die Sensoreinrichtung ein in oder an dem Laserbearbeitungskopf angeordneter Drucksensor oder optischer Sensor ist.

Im Folgenden werden weitere Ausführungsformen beschrieben:
Empirisch ermittelte Parameter für unterschiedliche Laserbetriebsarten (kontinuierlich oder gepulst,) und Bearbeitungsarten (Schneiden, Gravieren, etc.) können für alle bekannten Werkstoffe in einer Datenbank in der Steuerung hinterlegt sein.

Es kann eine Unterscheidung getroffen werden zwischen sog. primären Parametern, z.B. Vorschub beim Schneiden, Laserleistung beim Schneiden, Fokuslage beim Schneiden, Gasdruck und Werkzeugradius, und sekundären Parametern, d.h. aus den primären Parametern errechnete Parameter. Darüber hinaus können sich auch sog. vererbte Parameter und feste Einstellungen ergeben. Bevorzugt sind diese Parameter in die genannten Kategorien aufgeteilt und jeweils miteinander in Beziehung gesetzt. Daraus ergeben sich die zuvor erwähnten Datensätze, die eine Verknüpfung der Sensordaten mit den optimalen Werten für die regelbaren Prozessparameter beinhalten.

Über eine empirische Verknüpfung von Schnittqualität (z.B. Fehler oder Abweichung von idealem Schnitt), die durch verschiedene Sensoren (Kameras, Strahlungsdetektoren, Spektroskopie, etc.) ermittelt wird, mit den dafür verantwortlichen Parametern ergibt sich eine Richtung der Optimierung. Damit wird dann ein "Anbieten" für "richtige" Parameter durch die Steuerung an den Benutzer möglich. Diesem steht es nun frei diese Parameter zu bestätigen oder Anpassungen vorzunehmen.

Als Variante können regelmässig durchzuführende Verstellungen der Parameter abgespeichert und in die Bestimmung der anzubietenden Parameter oder deren Änderung einfliessen (z.B. aufgrund Wegdriften von Reglern, Verschmutzung der Optik), es kann auch ein automatisches Nachstellen oder eine Meldung oder ein Eintrag in ein Log-File od. dgl. erfolgen.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung beschrieben sind.

Die Bezugszeichenliste ist Bestandteil der Offenbarung. Die Figuren werden zusammenhängend und übergreifend beschrieben. Gleiche Bezugszeichen bedeuten gleiche Bauteile, Bezugszeichen mit unterschiedlichen Indices geben funktionsgleiche oder ähnliche Bauteile an.

Es zeigen dabei:
- Fig. 1: eine erfindungsgemässe Laserbearbeitungsvorrichtung in schematischer Darstellung,
- Fig. 2: ein erfindungsgemässes Laserbearbeitungsverfahren in schematischer Darstellung,
- Fig. 3: einen Laserbearbeitungskopf im Schnitt,
- Fig. 4: eine Klassifikationseinrichtung mit Klassifikationssystem, und
- Fig. 5: eine in graphische Darstellung umgewandelte Regel zum Generieren von Prozessparametern.

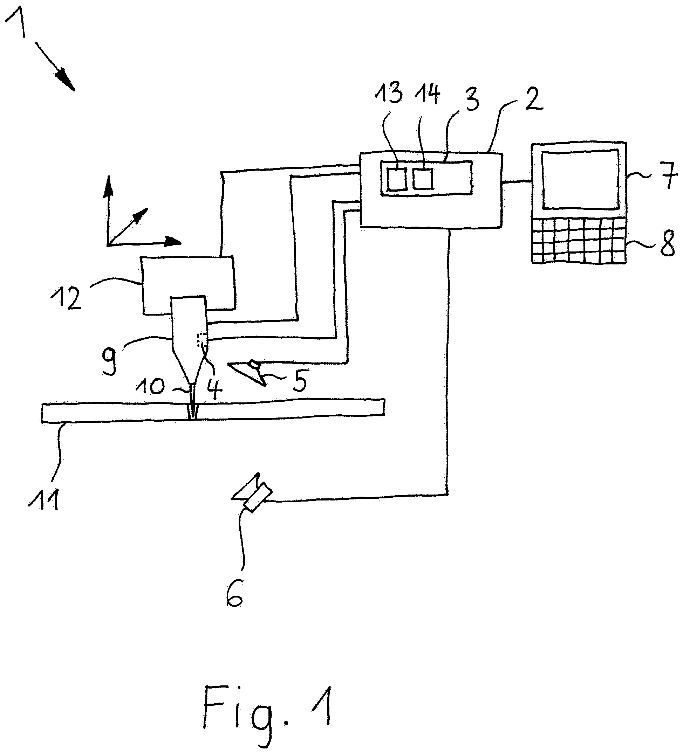

Fig. 1 zeigt eine Laserbearbeitungsvorrichtung 1 zur Bearbeitung eines Werkstückes 11 mit einem Laserstrahl 10 in Form einer Laserschneidmaschine.

Diese umfasst eine Steuereinrichtung 2, durch die ein Laserbearbeitungsvorgang unter Anwendung von Prozessparametern steuerbar ist, eine Eingabeschnittstelle 8 und eine Ausgabeschnittstelle 7 für das Bedienpersonal, die jeweils mit der Steuereinrichtung 2 verbunden sind, und Sensoreinrichtungen 4, 5, 6 zur Überwachung des Laserbearbeitungsvorganges.

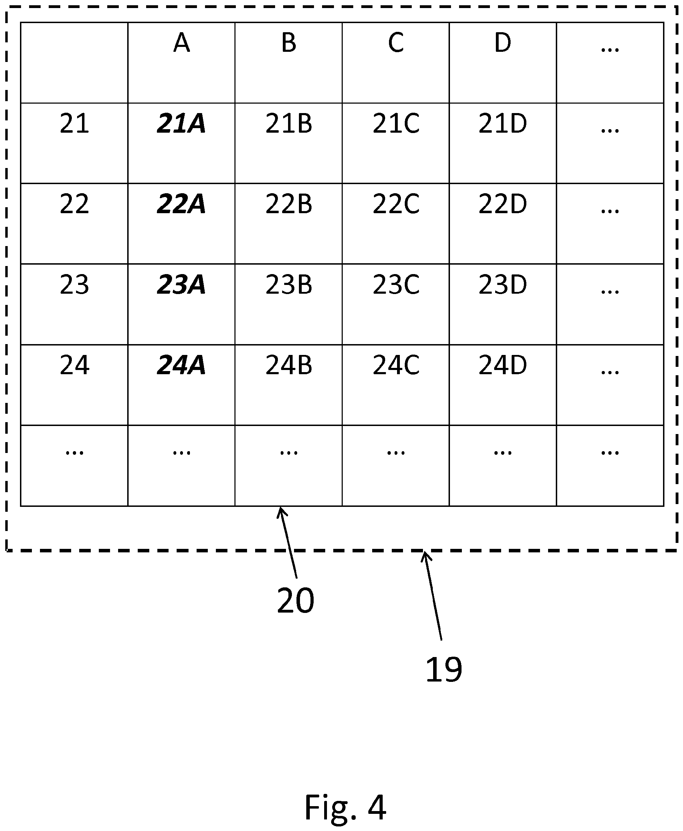

Fig. 4 zeigt eine Klassifikationseinrichtung 19, in der die Laserbearbeitungsvorgänge unterschiedlicher Art in einer Klassifikation 20 eingeteilt sind. Die Klassifikationseinrichtung 19 kann Bestandteil der Steuereinrichtung 2, eines internen oder externen Datenspeichers oder eines gesonderten Konfigurationsmoduls sein. Durch die Klassifikation 20 wird jedem Laserbearbeitungsvorgang A, B, C, D (erste Zeile der Tabelle) ein Satz von Prozessparametern 21A-24A, 21B-24B, usw., zugeordnet, die bei der Ausführung des betreffenden Laserbearbeitungsvorganges zur Anwendung kommen.

Die erste Spalte der Tabelle aus Fig. 4 beschreibt die Prozessparametertypen: Mit 21 wird der Prozessparametertyp: Fokuslage; mit 22 der Prozessparametertyp: Vorschubgeschwindigkeit; mit 23 der Prozessparametertyp: Laserleistung; und mit 24 der Prozessparametertyp: Düsenabstand beschrieben.

Somit sind 21A, 21B, 21C, 21D die konkreten Prozessparameter für die Fokuslage; 22A, 22B, 22C, 22D die Prozessparameter Vorschubgeschwindigkeit; 23A, 23B, 23C, 23D die Prozessparameter Laserleistung und 24A, 24B, 24C, 24 die Prozessparameter Düsenabstand für die jeweiligen Laserbearbeitungsarten A, B, C, D.

A bezeichnet in der dargestellten Ausführungsform einen Laserbearbeitungsvorgang mit kontinuierlichem Laserstrahl; B einen Laserbearbeitungsvorgang mit gepulstem Laserstrahl; C einen Laserbearbeitungsvorgang "Gravieren" und D einen Laserbearbeitungsvorgang "Anschneiden". Weitere Bearbeitungsarten sind selbstverständlich denkbar und können umfassen: 'continuous-wave'-Modus für kleine Konturen, Scanning, Abdampfen und vieles mehr.

Die Klassifikationseinrichtung 19 ist derart ausgebildet, dass bei einer Festlegung und/oder Veränderung zumindest eines ersten Prozessparameters (z. B. 21A) eines Laserbearbeitungsvorganges (z. B. A) automatisch zumindest ein Prozessparameter (z. B. 21B) eines anderen, in der Klassifikation enthaltenen Laserbearbeitungsvorganges (z. B. B) gemäss zumindest einer hinterlegten Regel in Abhängigkeit des ersten Prozessparameters festlegbar und/oder veränderbar ist. In Fig. 4 sind die ersten bzw. primären Prozessparameter 'fett' und 'kursiv' dargestellt, während die sekundären Parameter in Normalschrift dargestellt sind.

Grundsätzlich können primäre Prozessparameter und sekundäre Prozessparameter definiert sein, wobei sich die sekundären Prozessparameter automatisch von den primären ableiten, während die primären Parameter durch den Bediener oder in Abhängigkeit von Sensordaten festgelegt und/oder verändert werden (und von den sekundären somit in gewisser Weise unabhängig sind). In Fig. 4 sind die primären bzw. ersten Prozessparameter zusätzlich hervorgehoben ('fett' und 'kursiv') dargestellt. Die konkrete Auswahl bzw. Zuordnung der primären Parameter kann grundsätzlich je nach Anforderung auch anders sein. Eine Änderung dieser Definition ist selbstverständlich möglich.

Bei einer Festlegung und/oder Veränderung zumindest eines ersten (primären) Prozessparameters eines Laserbearbeitungsvorganges wird nun automatisch zumindest ein (sekundärer) Prozessparameter eines anderen, in der Klassifikation enthaltenen Laserbearbeitungsvorganges gemäss zumindest einer hinterlegten Regel in Abhängigkeit des ersten Prozessparameters festgelegt und/oder verändert. Wie bereits erwähnt kann der jedem Laserbearbeitungsvorgang A, B, C, D zugeordnete Satz von Prozessparametern die Prozessparameter Fokuslage und/oder Vorschubgeschwindigkeit und/oder Laserleistung und/oder Düsenabstand vom Werkstück 11 umfassen.

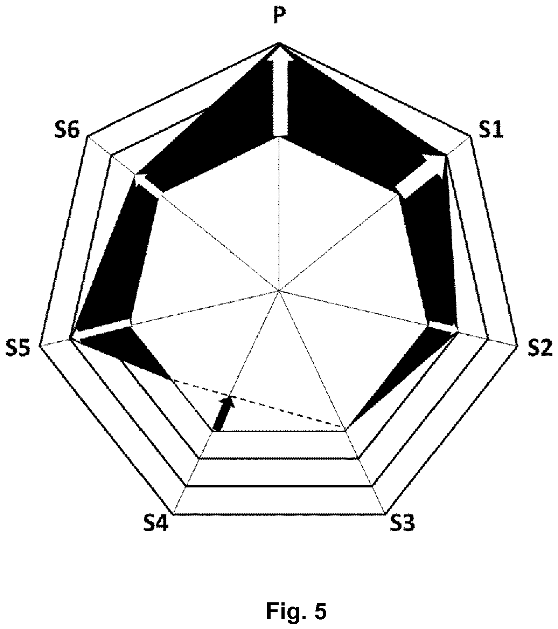

Fig. 5 zeigt in graphischer Form die Abhängigkeitsverhältnisse (entsprechend den hinterlegten Regeln) von sekundären Prozessparametern S1...S6 von einem primären Prozessparameter P. Vielfachabhängigkeiten sind ebenso denkbar, z.B. könnte der Prozessparameter 21B Fokuslage von den primären Parametern 21A und 22A abhängen.

Die zumindest eine hinterlegte Regel ist vorzugsweise über eine Eingabeschnittstelle 8 veränderbar.

Bevorzugt erfolgt die Festlegung und/oder Veränderung zumindest eines ersten (primären) Prozessparameters P durch eine Eingabe an einer Eingabeschnittstelle 8 der Laserbearbeitungsvorrichtung 1 durch eine Bedienperson.

In diesem Zusammenhang könnten an einer Ausgabeschnittstelle 7 der Laserbearbeitungsvorrichtung 1 mehrere Bilder von Werkstücken unterschiedlicher Bearbeitungsqualität dargestellt werden, wobei jedes Bild einem bestimmten Wert zumindest eines ersten Prozessparameters zugeordnet ist. Die Festlegung und/oder Veränderung des zumindest einen ersten Prozessparameters erfolgt dann durch Auswahl eines der Bilder durch eine Bedienperson. Das System erlangt dadurch Kenntnis von den Auswirkungen eines bestimmten Prozessparameters und kann diesen verändern, um die Bearbeitungsqualität zu verbessern.

Die Festlegung und/oder Veränderung zumindest eines ersten Prozessparameters kann auch in Abhängigkeit von Sensordaten einer Sensoreinrichtung 4, 5, 6 erfolgen wie weiter unten näher beschrieben wird.

Die Beurteilung der Bearbeitungs- bzw. Schneidqualität kann auch ohne Sensor erfolgen und zwar nur durch die optische Beurteilung der Schnittfläche durch den Bediener. Er schneidet ein Teil und vergleicht die Qualität mit verschiedenen, dargestellten Qualitäten auf dem Bildschirm und drückt auf das am nächsten liegende Bild. Aus dieser Information könnte die Steuerung nun zumindest einen Vorschlag für eine Veränderung machen. Dieser Vorgang kann aber auch noch unterstützt werden durch mindestens eine Sensoreinrichtung.

Ein solcher Optimierungsvorgang betrifft zunächst nur die (wichtigen) primären Prozessparameter. Sind diese ermittelt, werden mit den hinterlegten Regeln auf der Steuereinrichtung oder einem Speicherort (dies könnte auch ausserhalb der Maschine sein) automatisch die Werte für die sekundären Parameter errechnet und der gesamte Datensatz gespeichert. Mit diesem kompletten Datensatz startet dann die Produktion. Mit diesem Schritt wird dem Bediener Aufwand erspart und er muss nicht über das nötige Wissen verfügen.

Das vollautomatische Ermitteln der primären Prozessparameter mit mindestens einem Sensor ohne Interaktion eines Bedieners ist ebenfalls denkbar. Dabei beurteilen die Sensoren auch nur die primären Parameter bzw. deren Auswirkungen auf die Bearbeitungsqualität und die sekundären werden nach den hinterlegten Regeln errechnet.

Eine Sensoreinrichtung (z.B. Kamera) muss nicht zwingend während dem Laserprozess zum Einsatz kommen, sondern könnte auch erst nachfolgend eingesetzt werden. Allerdings ist auch ein solcher Sensor mit der Steuerung verbunden und liefert die Information direkt weiter.

Beispiel: Die geschnittene Probe wird aus der Maschine entnommen und die Schnittfläche vor eine Kamera gehalten. Diese wertet die Rauheit und die Gratbildung aus und übermittelt diese Informationen an die Steuerung. Diese Eigenschaften werden nun mit hinterlegten Werten verglichen und aufgrund der Abweichung eine Anpassung der Prozessparameter vorgeschlagen.

Weiteres Beispiel: Eine ausgeschnittene Bohrung wird von der Kamera erfasst (nach dem Schneidprozess, innerhalb oder ausserhalb der Schneidanlage) und der Durchmesser bestimmt (mit entsprechender Bildverarbeitungssoftware). Der ermittelte Durchmesser wird mit dem programmierten (d.h. idealen) Durchmesser verglichen und die Abweichung als Vorschlag für die Anpassung der Prozessparameter vorgeschlagen. Dieser Vorgang könnte aber auch vollautomatisch ablaufen, z.B. dass die Kamera selbständig die erste Bohrung ausmisst und die nötige Parameteranpassung ab dem zweiten Loch bereits anwendet.

Die Sensoreinrichtung, mit deren Sensordaten eine Festlegung bzw. Veränderung der primären Parameter erfolgen könnte auch ausserhalb der Laserbearbeitungsvorrichtung vorgesehen sein. Damit kann eine Untersuchung eines bearbeiteten Werkstückes auch ausserhalb der Laserbearbeitungsvorrichtung erfolgen.

Falls eine angegebene Abweichung des Bedieners oder eines Sensors zu gross ist (im Vergleich zu den hinterlegten Daten) schlägt das System eine Überprüfung oder Warnung vor. Beispiel: Der Bediener schneidet ein Teil, das Grat an der Blechunterseite aufweist. Er drückt das entsprechende Bild und die Anlage schlägt ihm vor, die Fokuslage um 1 mm tiefer zu stellen. Dies quittiert er und schneidet das nächste Teil, das wiederum Grat aufweist (ev. etwas weniger). Dies wiederholt er 5x ohne signifikante Verbesserung. Nach dem fünften Mal schlägt die Anlage dem Bediener vor, dass er die Linse reinigt, denn dies ist vermutlich der Grund für die grosse Abweichung. Es wird also neben dem steuerungsunterstützten Ermitteln von Laser-Prozessparametern auch noch die Plausibilität überprüft und eine mögliche Ursache zur Behebung vorgeschlagen. Auch dieser Vorgang entlastet den Bediener von Fachwissen und Zusammenhängen.

Im Folgenden wird ein konkretes Ausführungsbeispiel beschrieben:
Die Steuereinrichtung 2 umfasst zur Anleitung des Bedienpersonals ein Anleitungsprogramm 3, das ausgebildet ist, um in Abhängigkeit der von der zumindest einen Sensoreinrichtung 4, 5, 6 aufgenommenen Sensordaten zumindest einen Vorschlag für die Veränderung eines Prozessparameters zu erstellen und an der Ausgabeschnittstelle 7 für das Bedienpersonal bereitzustellen.

Die Sensoreinrichtungen 4, 5, 6 sind ausgebildet, um die Auswirkungen des Laserstrahles 10 auf das Werkstück 11, insbesondere die Schnittqualität, während des Laserbearbeitungsvorganges zu überwachen, wobei die Sensoreinrichtung 4 vorzugsweise eine Kamera ist.

Zumindest eine Sensoreinrichtung 4 ist ausgebildet, um laserwerkzeug-bezogene Parameter während des Laserbearbeitungsvorganges zu überwachen, wobei vorzugsweise die Sensoreinrichtung 4 ein in oder an dem Laserbearbeitungskopf 9 angeordneter Drucksensor oder optischer Sensor ist.

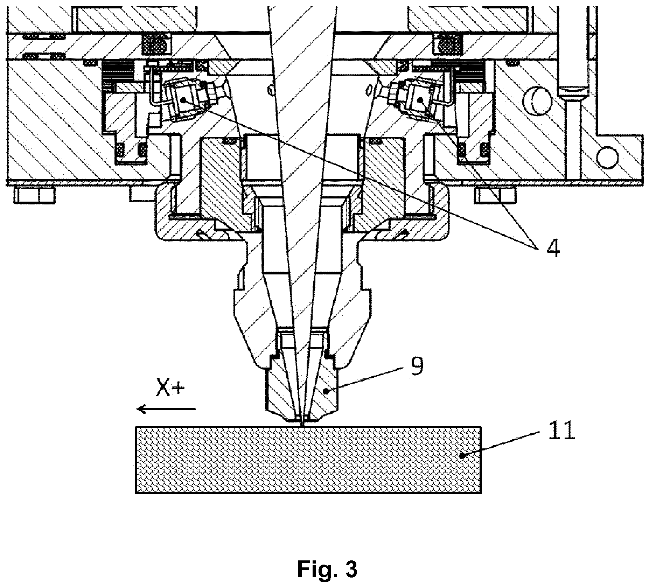

Eine Sensoreinrichtung 4 der dargestellten Ausführungsform, z.B. ein optischer Sensor ist im Laserbearbeitungskopf 9 angeordnet und überwacht z.B. die Schnittqualität und/oder den Laserquerschnitt. Im Detail ist eine derartige Sensoreinrichtung in Fig. 3 dargestellt. Eine (nur schematisch dargestellte) Antriebseinheit 12 dient zum Verfahren des Laserbearbeitungskopfes 9 in alle Raumrichtungen. Weitere Sensoreinrichtungen 5, 6 können vorgesehen sein, um die Schnittqualität von ausserhalb des Laserkopfes 9 zu überwachen, z.B. oberhalb und unterhalb des Werkstückes 11.

Fig. 3 zeigt einen optischen Sensor 4 innerhalb des Laserbearbeitungskopfes 9, der die Schnittspaltbreite misst. Dazu wird Licht einer Diode über einen Umlenkspiegel in Richtung Düsenöffnung gerichtet. Der von der Diode beleuchtete Schneidbereich wird mittels eines gegenüberliegenden optischen Sensors aufgenommen, der das ebenfalls über einen Umlenkspiegel gelenkte reflektierte Licht detektiert.

Die Steuereinrichtung 2 umfasst Referenzdaten 13 und das Anleitungsprogramm 3 ist eingerichtet, um die von der zumindest einen Sensoreinrichtung 4, 5, 6 aufgenommenen Sensordaten und/oder daraus abgeleiteten Daten mit den Referenzdaten 13 zu vergleichen, wobei die Erstellung zumindest eines Vorschlages für die Veränderung eines Prozessparameters in Abhängigkeit der Abweichung der Sensordaten und/oder daraus abgeleiteter Daten von den Referenzdaten 13 erfolgt.

Die Steuereinrichtung 2 umfasst auch einen vorzugsweise empirisch ermittelten Datensatz 14, in dem mögliche Werte der Sensordaten und/oder daraus abgeleiteter Daten mit Werten für den dazugehörigen Prozessparameter verknüpft sind. Das Anleitungsprogramm 3 ist eingerichtet ist, um die Erstellung zumindest eines Vorschlages für die Veränderung eines Prozessparameters mittels des Datensatzes 14 durchzuführen.

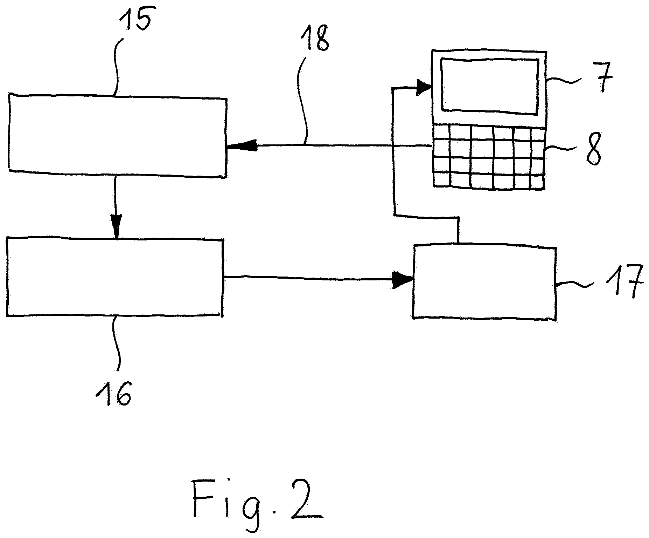

Anhand der Fig. 2 wird nun das Laserbearbeitungsverfahren zur Bearbeitung eines Werkstückes 11 mit einem Laserstrahl 10 in einer Laserbearbeitungsvorrichtung 1 näher beschrieben.

Verfahrensschritt 15 beinhaltet das Steuern eines Laserbearbeitungsvorganges mit der Steuereinrichtung 2 unter Anwendung von Prozessparametern,
Parallel dazu erfolgt im Verfahrensschritt 16 eine Überwachung des Laserbearbeitungsvorganges mit zumindest einer Sensoreinrichtung 4, 5, 6.

Im Verfahrensschritt 17 erfolgt nun eine Erstellung/Generierung zumindest eines Vorschlages für die Veränderung eines Prozessparameters in Abhängigkeit der von der zumindest einen Sensoreinrichtung 4, 5, 6 aufgenommenen Sensordaten.

Der Vorschlag für die Veränderung des Prozessparameters wird an einer Ausgabeschnittstelle 7 für das Bedienpersonal bereitgestellt, z. B. an einem Bildschirm angezeigt.

Die Eingabeschnittstelle 8 empfängt nun die Eingabe der Bedienperson. Vorzugsweise erfolgt eine Veränderung des Prozessparameters (Verfahrensschritt 18), auf den sich der Vorschlag bezieht, erst dann, wenn das Bedienpersonal an der Eingabeschnittstelle 8 der Laserbearbeitungsvorrichtung 1 eine dem Vorschlag entsprechende Eingabe oder eine vom Vorschlag abweichende Eingabe für den Prozessparameter durchführt.

In einer bevorzugten Ausführungsform werden die von der zumindest einen Sensoreinrichtung 4, 5, 6 aufgenommenen Sensordaten und/oder daraus abgeleitete Daten mit Referenzdaten 13 verglichen. Die Erstellung zumindest eines Vorschlages für die Veränderung eines Prozessparameters erfolgt in Abhängigkeit der Abweichung der Sensordaten und/oder daraus abgeleiteter Daten von den Referenzdaten 13.

Dabei kann vorgesehen sein, dass die Erstellung zumindest eines Vorschlages für die Veränderung eines Prozessparameters nur erfolgt, wenn die Abweichung einen vorgegebenen Grenzwert überschreitet.

Die Erstellung zumindest eines Vorschlages für die Veränderung eines Prozessparameters erfolgt bevorzugt mittels eines vorzugsweise empirisch ermittelten Datensatzes 14, in dem mögliche Werte der Sensordaten und/oder daraus abgeleiteter Daten mit Werten für den dazugehörigen Prozessparameter verknüpft sind.

Eine optionale Erweiterung besteht darin, dass der Datensatz 14 verändert wird, wenn eine vom Vorschlag für die Veränderung des Prozessparameters abweichende Eingabe oder eine Reihe abweichender Eingaben durch das Bedienpersonal erfolgt/erfolgen, wobei die Veränderung des Datensatzes in Abhängigkeit der abweichenden Eingabe(n) erfolgt. Dies kann automatisch erfolgen oder nach Freigabe oder Einstellung durch die Bedienperson.

Es können auch zumindest zwei Parameter während des

Laserbearbeitungsvorganges von Sensoreinrichtungen 4, 5, 6 überwacht werden (z. B. Schnittspaltbreite und Einstichdauer). Der Prozessparameter, auf den sich der vom System unterbreitete Vorschlag bezieht, ist dabei ein von den zumindest zwei von den Sensoreinrichtungen 4, 5, 6 überwachten Parameter verschiedener Prozessparameter (z. B. die Laserleistung oder die Vorschubgeschwindigkeit).

Wie bereits erwähnt erfolgt das Verfahren mittels eines Anleitungsprogramms 3, das in der Steuereinrichtung 2 der Laserbearbeitungsvorrichtung 1 enthalten ist. das Anleitungsprogramm dient zur Schaffung einer Mensch-Maschine-Schnittstelle, über die die Bedienperson interaktiv den Bearbeitungs-/Schneidprozess beeinflussen kann.

Die Erfindung ist nicht auf die beschriebenen Ausführungsformen und die darin hervorgehobenen Aspekte beschränkt. Vielmehr ist innerhalb des Erfindungsgedankens eine Vielzahl von Abwandlungen möglich, die im Rahmen fachmännischen Handelns liegen. Ebenso ist es möglich, durch Kombination der genannten Mittel und Merkmale weitere Ausführungsvarianten zu realisieren, ohne den Rahmen der Erfindung, der durch die Ansprüche definiert wird, zu verlassen.

Abschliessend sei erwähnt, dass sich die Erfindung auf alle möglichen Bearbeitungsarten bezieht, insbesondere Einstechen, Schneiden, Anschneiden, Gravieren, Abdampfen, Schweissen, u.v.m.

### Bezugszeichenliste

- 1: Laserbearbeitungsvorrichtung
- 2: Steuereinrichtung
- 3: Anleitungsprogramm
- 4: Sensoreinrichtung
- 5: Sensoreinrichtung
- 6: Sensoreinrichtung
- 7: Ausgabeschnittstelle
- 8: Eingabeschnittstelle
- 9: Laserbearbeitungskopf
- 10: Laserstrahl
- 11: Werkstück
- 12: Antriebseinheit
- 13: Referenzdaten
- 14: Datensatz
- 15: Verfahrensschritt: Steuern eines Laserbearbeitungsvorganges
- 16: Verfahrensschritt: Überwachung des Laserbearbeitungsvorganges
- 17: Verfahrensschritt: Erstellung eines Vorschlages
- 18: Verfahrensschritt: Veränderung des Prozessparameters
- 19: Klassifikationseinrichtung
- 20: Klassifikation
- 21: Prozessparametertyp: Fokuslage
- 22: Prozessparametertyp: Vorschubgeschwindigkeit
- 23: Prozessparametertyp: Laserleistung
- 24: Prozessparametertyp: Düsenabstand
- 21A, 21B, 21C, 21D: Prozessparameter Fokuslage
- 22A, 22B, 22C, 22D: Prozessparameter Vorschubgeschwindigkeit
- 23A, 23B, 23C, 23D: Prozessparameter Laserleistung
- 24A, 24B, 24C, 24D: Prozessparameter Düsenabstand
- A: Laserbearbeitungsvorgang mit kontinuierlichem Laserstrahl
- B: Laserbearbeitungsvorgang mit gepulstem Laserstrahl
- C: Laserbearbeitungsvorgang Gravieren
- D: Laserbearbeitungsvorgang Anschneiden
- P: Primärer Prozessparameter
- S1...S6: Sekundäre Prozessparameter

## Patentansprüche

1. Verfahren zur Konfiguration einer Laserbearbeitungsvorrichtung (1), die eine Steuereinrichtung (2) umfasst, wobei mit der Laserbearbeitungsvorrichtung (1) Laserbearbeitungsvorgänge (A, B, C. D) unterschiedlicher Art ausführbar sind, die jeweils von der Steuereinrichtung (2) unter Anwendung von Prozessparametern gesteuert werden, wobei die Laserbearbeitungsvorgänge unterschiedlicher Art in eine Klassifikation (20) eingeteilt sind, in der jedem Laserbearbeitungsvorgang (A, B, C. D) ein Satz von Prozessparametern (21A...24A; 21B...24B; 21C...24C; 22D...24D) zugeordnet ist, die bei der Ausführung des betreffenden Laserbearbeitungsvorganges (A, B, C. D) zur Anwendung kommen, **dadurch gekennzeichnet, dass** bei einer Festlegung und/oder Veränderung zumindest eines ersten Prozessparameters (P; 21A...24A) eines Laserbearbeitungsvorganges (A) automatisch zumindest ein Prozessparameter (S1...S6; 21B...24B; 21C...24C; 22D...24D) eines anderen, in der Klassifikation (20) enthaltenen Laserbearbeitungsvorganges (B, C. D) gemäss zumindest einer hinterlegten Regel in Abhängigkeit des ersten Prozessparameters (P; 21A...24A) festgelegt und/oder verändert wird.

2. Verfahren nach Anspruch 1, **dadurch gekennzeichnet, dass** in der Klassifikation (20) primäre Prozessparameter (P) und sekundäre Prozessparameter (S1...S6) definiert sind, wobei die sekundären Prozessparameter (S1...S6) gemäss hinterlegten Regeln in Abhängigkeit zumindest eines primären Prozessparameters (P) festgelegt und/oder verändert werden, und wobei vorzugsweise primäre Prozessparameter (P) ausschliesslich durch Bedienereingaben und/oder in Abhängigkeit von Sensordaten festgelegt und/oder veränderbar sind.

3. Verfahren nach Anspruch 1 oder 2, **dadurch gekennzeichnet, dass** die Klassifikation (20) als Laserbearbeitungsvorgänge unterschiedlicher Art zumindest einen Laserbearbeitungsvorgang mit kontinuierlicher Laserstrahlung und einen Laserbearbeitungsvorgang mit gepulster Laserstrahlung umfasst **und/oder** dass die Klassifikation (20) als Laserbearbeitungsvorgänge unterschiedlicher Art das Anschneiden und/oder Gravieren und/oder Scanning und/oder Abdampfen und/oder kontinuierliches Schneiden kleiner Konturen umfasst.

4. Verfahren nach einem der vorhergehenden Ansprüche, **dadurch gekennzeichnet, dass** der jedem Laserbearbeitungsvorgang (A, B, C. D) zugeordnete Satz von Prozessparametern die Prozessparameter Fokuslage und/oder Vorschubgeschwindigkeit und/oder Laserleistung und/oder Düsenabstand vom Werkstück (11) umfasst, **und/oder** dass die zumindest eine hinterlegte Regel vorzugsweise über eine Eingabeschnittstelle (8) veränderbar ist.

5. Verfahren nach einem der vorhergehenden Ansprüche, **dadurch gekennzeichnet, dass** die Festlegung und/oder Veränderung zumindest eines ersten Prozessparameters (P; 21A...24A) durch eine Eingabe an einer Eingabeschnittstelle (8) der Laserbearbeitungsvorrichtung (1) durch eine Bedienperson erfolgt.

6. Verfahren nach einem der vorhergehenden Ansprüche, **dadurch gekennzeichnet, dass** an einer Ausgabeschnittstelle (7) der Laserbearbeitungsvorrichtung (1) mehrere Bilder von Werkstücken unterschiedlicher Bearbeitungsqualität dargestellt werden, wobei jedes Bild einem bestimmten Wert zumindest eines ersten Prozessparameters (P; 21A...24A) zugeordnet ist, und dass die Festlegung und/oder Veränderung des zumindest einen ersten Prozessparameters (P; 21A...24A) durch Auswahl eines der Bilder durch eine Bedienperson erfolgt.

7. Verfahren nach einem der vorhergehenden Ansprüche, **dadurch gekennzeichnet, dass** die Festlegung und/oder Veränderung zumindest eines ersten Prozessparameters (P; 21A...24A) in Abhängigkeit von Sensordaten einer Sensoreinrichtung (4, 5, 6) erfolgt.

8. Laserbearbeitungsverfahren zur Bearbeitung eines Werkstückes (11) mit einem Laserstrahl (10) in einer Laserbearbeitungsvorrichtung (1), umfassend die Schritte:
- Konfiguration der Laserbearbeitungsvorrichtung (1) nach einem der vorhergehenden Ansprüche,
- Steuern (15) eines Laserbearbeitungsvorganges mit einer Steuereinrichtung (2) unter Anwendung von Prozessparametern.

9. Laserbearbeitungsverfahren nach Anspruch 8, **gekennzeichnet durch** die Schritte
- Überwachung (16) des Laserbearbeitungsvorganges und/oder Inspektion des bearbeiteten Werkstückes (11) mit zumindest einer Sensoreinrichtung (4, 5, 6),
- Erstellung (17) zumindest eines Vorschlages für die Veränderung des zumindest einen ersten Prozessparameters in Abhängigkeit der von der zumindest einen Sensoreinrichtung (4, 5, 6) aufgenommenen Sensordaten und
- Bereitstellung des Vorschlages für die Veränderung des Prozessparameters an einer Ausgabeschnittstelle (7) für das Bedienpersonal.

10. Laserbearbeitungsverfahren nach Anspruch 9, **dadurch gekennzeichnet, dass** eine Veränderung (18) des Prozessparameters, auf den sich der Vorschlag bezieht, erst dann erfolgt, wenn das Bedienpersonal an einer Eingabeschnittstelle (8) der Laserbearbeitungsvorrichtung (1) eine dem Vorschlag entsprechende Eingabe oder eine vom Vorschlag abweichende Eingabe für den Prozessparameter durchführt.

11. Laserbearbeitungsverfahren nach Anspruch 9 oder 10, **dadurch gekennzeichnet, dass** die von der zumindest einen Sensoreinrichtung (4, 5, 6) aufgenommenen Sensordaten und/oder daraus abgeleitete Daten mit Referenzdaten (13) verglichen werden und dass die Erstellung zumindest eines Vorschlages für die Veränderung eines Prozessparameters in Abhängigkeit der Abweichung der Sensordaten und/oder daraus abgeleiteter Daten von den Referenzdaten (13) erfolgt **und/oder dass** die Erstellung zumindest eines Vorschlages für die Veränderung eines Prozessparameters mittels eines vorzugsweise empirisch ermittelten Datensatzes (14) erfolgt, in dem mögliche Werte der Sensordaten und/oder daraus abgeleiteter Daten mit Werten für den dazugehörigen Prozessparameter verknüpft sind.

12. Laserbearbeitungsverfahren nach einem der Ansprüche 8 bis 11, **dadurch gekennzeichnet, dass** die Laserbearbeitungsvorrichtung einen Vorschlag zur Durchführung einer Massnahme, insbesondere einer Reinigungs-, Wartungs- und/oder Reparaturmassnahme generiert, wenn zumindest ein Prozessparameter und/oder zumindest ein die Bearbeitung betreffender Auswerteparameter eine vorgegebene Grenze überschreitet.

13. Laserbearbeitungsverfahren nach einem der Ansprüche 9 bis 12, **dadurch gekennzeichnet, dass** die Erstellung zumindest eines Vorschlages für die Veränderung eines Prozessparameters in Abhängigkeit der von der zumindest einen Sensoreinrichtung (4, 5, 6) aufgenommenen Sensordaten und die Bereitstellung des Vorschlages für die Veränderung des Prozessparameters an einer Ausgabeschnittstelle für das Bedienpersonal durch ein Anleitungsprogramm (3) erfolgt, das in der Steuereinrichtung (2) der Laserbearbeitungsvorrichtung (1) enthalten ist.

14. Laserbearbeitungsvorrichtung (1) zur Bearbeitung eines Werkstückes (11) mit einem Laserstrahl (10), mit einer Steuereinrichtung (2), wobei mit der Laserbearbeitungsvorrichtung (1) Laserbearbeitungsvorgänge unterschiedlicher Art ausführbar sind, die jeweils von der Steuereinrichtung (2) unter Anwendung von Prozessparametern gesteuert werden, wobei die Laserbearbeitungsvorrichtung eine Klassifikationseinrichtung umfasst, in der die Laserbearbeitungsvorgänge unterschiedlicher Art in eine Klassifikation eingeteilt sind, in der jedem Laserbearbeitungsvorgang ein Satz von Prozessparametern zugeordnet ist, die bei der Ausführung des betreffenden Laserbearbeitungsvorganges zur Anwendung kommen, **dadurch gekennzeichnet, dass** die Klassifikationseinrichtung derart ausgebildet ist, dass bei einer Festlegung und/oder Veränderung zumindest eines ersten Prozessparameters eines Laserbearbeitungsvorganges automatisch zumindest ein Prozessparameter eines anderen, in der Klassifikation enthaltenen Laserbearbeitungsvorganges gemäss zumindest einer hinterlegten Regel in Abhängigkeit des ersten Prozessparameters festlegbar und/oder veränderbar ist.

15. Laserbearbeitungsvorrichtung nach Anspruch 14, **dadurch gekennzeichnet, dass** die Laserbearbeitungsvorrichtung eine Eingabeschnittstelle (8) und eine Ausgabeschnittstelle (7) für das Bedienpersonal, die mit der Steuereinrichtung (2) verbunden sind, und zumindest eine Sensoreinrichtung (4, 5, 6) zur Überwachung des Laserbearbeitungsvorganges und/oder zur Inspektion eines bearbeiteten Werkstückes (11) umfasst, wobei die Steuereinrichtung (2) zur Anleitung des Bedienpersonals ein Anleitungsprogramm (3) umfasst, das ausgebildet ist, um in Abhängigkeit der von der zumindest einen Sensoreinrichtung (4, 5, 6) aufgenommenen Sensordaten zumindest einen Vorschlag für die Veränderung des zumindest einen ersten Prozessparameters zu erstellen und an der Ausgabeschnittstelle (7) für das Bedienpersonal bereitzustellen.

## Claims

1. A method for configuration of a laser processing apparatus (1), comprising a control device (2), wherein laser processing operations (A, B, C. D) of different types, each being controlled by the control device (2) by application of process parameters, may be performed with the laser processing apparatus (1), wherein the laser processing operations of different types are divided into a classification (20), in which a set of process parameters (21A...24A; 21B...24B; 21C...24C; 22D...24D) being applied in the performance of the respective laser processing operation (A, B, C. D) is associated with each laser processing operation (A, B, C. D), **characterized in that,** upon determination and/or modification of at least one first process parameter (P; 21A...24A) of a laser processing operation (A), at least one process parameter (S1...S6; 21B...24B; 21C...24C; 22D...24D) of another laser processing operation (B, C. D) included in the classification (20) is automatically determined and/or modified depending on the first process parameter (P; 21A...24A) in accordance with at least one stored rule.

2. The method according to claim 1, **characterized in that** primary process parameters (P) and secondary process parameters (S1...S6) are defined in the classification (20), wherein the secondary process parameters (S1...S6) are defined and/or modified depending on at least one primary process parameter (P) in accordance with stored rules, and wherein preferably primary process parameters (P) are determined and/or modified exclusively by operator inputs and/or depending on sensor data.

3. The method according to claim 1 or 2, **characterized in that** the classification (20) comprises, as laser processing operations of different types, at least one laser processing operation with continuous laser radiation and one laser processing operation with pulsed laser radiation and/or **in that** the classification (20) comprises, as laser processing operations of different types, cutting and/or engraving and/or scanning and/or evaporating and/or continuous cutting of small contours.

4. The method according to any one of the preceding claims, **characterized in that** the set of process parameters associated with each laser processing operation (A, B, C. D) comprises the process parameters focus position and/or feed speed and/or laser power and/or nozzle distance from the workpiece (11) **and/or in that** the at least one stored rule is preferably modifiable via an input interface (8).

5. The method according to any one of the preceding claims, **characterized in that** the determination and/or modification of at least one first process parameter (P; 21A...24A) by an input at an input interface (8) of the laser processing apparatus (1) is carried out by an operator.

6. The method according to any one of the preceding claims, **characterized in that** at an output interface (7) of the laser processing apparatus (1) multiple images of workpieces of different processing quality are displayed, wherein each image is associated with a specific value of at least one first process parameter (P; 21A...24A), and **in that** the determination and/or modification of the at least one first process parameter (P; 21A...24A) is carried out by selection of one of the images by an operator.

7. The method according to any one of the preceding claims, **characterized in that** the determination and/or modification of at least one first process parameter (P; 21A...24A) is carried out depending on sensor data of a sensor device (4, 5, 6).

8. A laser processing method for processing a workpiece (11) with a laser beam (10) in a laser processing apparatus (1), comprising the steps of:
- configuration of the laser processing apparatus (1) according to any one of the previous claims,
- controlling (15) a laser processing operation with a control device (2) by application of process parameters.

9. The laser processing method according to claim 8, **characterized by** the steps of
- monitoring (16) of the laser processing process and/or inspection of the processed workpiece (11) with at least one sensor device (4, 5, 6),
- creation (17) of at least one proposal for the modification of the at least one first process parameter depending on the sensor data recorded by the at least one sensor device (4, 5, 6), and
- provision of the proposal for the modification of the process parameter at an output interface (7) for the operating personnel.

10. The laser processing method according to claim 9, **characterized in that** a modification (18) of the process parameter to which the proposal refers to is carried out only, when the operating personnel performs an input according to the proposal or an input deviating from the proposal for the process parameter at an input interface (8) of the laser processing apparatus (1).

11. The laser processing method according to claim 9 or 10, **characterized in that** the sensor data recorded by the at least one sensor device (4, 5, 6) and/or data derived therefrom are compared with reference data (13), and **in that** the creation of at least one proposal for the modification of a process parameter is carried out depending on the deviation of the sensor data and/or data derived therefrom from the reference data (13), **and/or in that** the creation of at least one proposal for the modification of a process parameter is carried out by means of a preferably empirically established data set (14), in which possible values of the sensor data and/or data derived therefrom are linked to values for the corresponding process parameter.

12. The laser processing method according to any one of the claims 8 to 11, **characterized in that** the laser processing apparatus generates a proposal for performance of a measure, in particular a cleaning, maintenance and/or repair measure, if at least one process parameter and/or at least one evaluation parameter relating to the processing exceeds a predetermined limit.

13. The laser processing method according to any one of claims 9 to 12, **characterized in that** the creation of at least one proposal for the modification of a process parameter depending on the sensor data recorded by the at least one sensor device (4, 5, 6) and the provision of the proposal for the modification of the process parameter at an output interface for the operating personnel is carried out by an instruction program (3) included in the control device (2) of the laser processing apparatus (1).

14. A laser processing apparatus (1) for processing a workpiece (11) with a laser beam (10), having a control device (2), wherein laser processing operations of different types, each being controlled by the control device (2) by application of process parameters, may be performed with the laser processing apparatus (1), wherein the laser processing apparatus comprises a classification device in which the laser processing operations of different types are divided into a classification in which a set of process parameters being applied in the performance of the respective laser processing operation is associated with each laser processing operation, **characterized in that** the classification device is designed in such a way that, upon determination and/or modification of at least one first process parameter of a laser processing operation, at least one process parameter of another laser processing operation included in the classification can automatically be determined and/or modified depending on the first process parameter in accordance with at least one stored rule.

15. The laser processing apparatus according to claim 14, **characterized in that** the laser processing apparatus comprises an input interface (8) and an output interface (7) for the operating personnel that are connected to the control device (2), and at least one sensor device (4, 5, 6) for monitoring the laser processing process and/or for inspection of a processed workpiece (11), wherein the control device (2) comprises, for instruction of the operating personnel, an instruction program (3), which is designed, depending on the sensor data recorded by the at least one sensor device (4, 5, 6), to create and to provide, to the operating personnel at the output interface (7), at least one proposal for the modification of the at least one first process parameter.

## Revendications

1. Procédé de configuration d'un dispositif d'usinage au laser (1) comprenant un dispositif de commande (2), dans lequel le dispositif d'usinage au laser (1) peut effectuer des opérations d'usinage au laser (A, B, C. D) de différents types, qui sont chacun commandées par le dispositif de commande (2) en utilisant des paramètres de processus, dans lequel les opérations d'usinage au laser de différents types sont réparties dans une classification (20), dans laquelle à chaque opération d'usinage au laser (A, B, C. D) est attribué un jeu de paramètres de processus (21A ... 24A ; 21B ... 24B ; 21C ... 24C ; 22D ... 24D), qui sont utilisés dans l'exécution de l'opération d'usinage au laser concernée (A, B, C. D), **caractérisé en ce que**, lors de la définition et/ou de la modification d'au moins un premier paramètre de processus (P ; 21A ... 24A) d'une opération d'usinage au laser (A), au moins un paramètre de processus (S1 ... S6 ; 21B ... 24B ; 21C ... 24C ; 22D ... 24D) d'une autre opération d'usinage au laser (B, C. D) contenue dans la classification (20) est défini et/ou modifié automatiquement selon au moins une règle stockée en mémoire en fonction du premier paramètre de processus (P ; 21A ... 24A).

2. Procédé selon la revendication 1, **caractérisé en ce que** sont définis dans la classification (20) des paramètres de processus primaires (P) et des paramètres de processus secondaires (S1 ... S6), les paramètres de processus secondaires (S1 ... S6) étant définis et/ou modifiés selon des règles stockées en mémoire en fonction d'au moins un paramètre de processus primaire (P) et, de préférence, les paramètres de processus primaires (P) étant définis et/ou modifiés exclusivement par des entrées opérateur et/ou en fonction de données du capteur.

3. Procédé selon la revendication 1 ou 2, **caractérisé en ce que** la classification (20) comprend, en tant qu'opérations d'usinage au laser de différents types, au moins une opération d'usinage au laser avec rayonnement laser continu et une opération d'usinage au laser avec un rayonnement laser pulsé **et/ou en ce que** la classification (20) comprend, en tant qu'opérations d'usinage au laser de différents types, la découpe et/ou la gravure et/ou le balayage et/ou l'évaporation et/ou la coupe en continu de petits contours.

4. Procédé selon l'une des revendications précédentes, **caractérisé en ce que** le jeu de paramètres de processus attribué à chaque opération d'usinage au laser (A, B, C. D) comprend les paramètres de processus de position focale et/ou de vitesse d'avance et/ou de puissance laser et/ou de la distance de la buse par rapport à la pièce (11) **et/ou en ce que** la ou au moins une règle stockée est de préférence modifiable via une interface d'entrée (8).

5. Procédé selon l'une des revendications précédentes, **caractérisé en ce que** la définition et/ou la modification d'au moins un premier paramètre de processus (P ; 21A ... 24A) est effectuée par une entrée au niveau d'une interface d'entrée (8) du dispositif d'usinage au laser (1) par un opérateur.

6. Procédé selon l'une des revendications précédentes, **caractérisé en ce que,** sur une interface de sortie (7) du dispositif d'usinage au laser (1), sont affichées plusieurs images de pièces de qualité d'usinage différente, à chaque image étant attribuée une valeur spécifique d'au moins un premier paramètre de traitement (P ; 21A ... 24A) et **en ce que** la définition et/ou la modification du au moins d'un premier paramètre de processus (P ; 21A ... 24A) est effectuée **en ce qu'**un opérateur sélectionne l'une des images.

7. Procédé selon l'une des revendications précédentes, **caractérisé en ce que** la définition et/ou la modification d'au moins un premier paramètre de processus (P ; 21A ... 24A) est effectuée en fonction des données de capteur d'un dispositif de capteur (4, 5, 6).

8. Procédé d'usinage au laser pour usiner une pièce (11) avec un faisceau laser (10) dans un dispositif d'usinage au laser (1), comprenant les étapes suivantes :
- configuration du dispositif d'usinage au laser (1) selon l'une des revendications précédentes,
- commande (15) d'une opération d'usinage au laser avec un dispositif de commande (2) en utilisant des paramètres de processus.

9. Procédé d'usinage au laser selon la revendication 8, **caractérisé par** les étapes
- surveillance (16) de l'opération d'usinage au laser et/ou inspection de la pièce usinée (11) avec au moins un dispositif de capteur (4, 5, 6),
- élaboration (17) d'au moins une proposition de modification du au moins d'un premier paramètre de processus en fonction des données de capteur enregistrées par le ou au moins un dispositif de capteur (4, 5, 6) et
- soumission de la proposition de modification du paramètre de processus au niveau d'une l'interface de sortie (7) pour le personnel opérateur.

10. Procédé d'usinage au laser selon la revendication 9, **caractérisé en ce qu'**une modification (18) du paramètre de processus auquel se rapporte la proposition n'a lieu que lorsque le personnel opérateur présente, sur une interface d'entrée (8) du dispositif d'usinage au laser (1), une entrée correspondant à la proposition ou une entrée différente de la proposition pour le paramètre de processus.

11. Procédé d'usinage au laser selon la revendication 9 ou 10, **caractérisé en ce que** les données enregistrées par le ou au moins un dispositif de capteur (4, 5, 6) et/ou des données dérivées de celles-ci sont comparées avec des données de référence (13) et **en ce que** la création d'au moins une proposition de modification d'un paramètre de processus est effectuée en fonction de l'écart entre les données de capteur et/ou les données dérivées de celles-ci et les données de référence (13) **et/ou en ce que** la création d'au moins une proposition de modification d'un paramètre de processus est effectuée au moyen d'un jeu de données déterminées de préférence empiriquement (14), dans lequel des valeurs possibles des données de capteur et/ou des données dérivées de celles-ci sont associées à des valeurs pour les paramètres de processus s'y rapportant.

12. Procédé d'usinage au laser selon l'une des revendications 8 à 11, **caractérisé en ce que** le dispositif d'usinage au laser génère une proposition pour effectuer une mesure, en particulier une mesure de nettoyage, de maintenance et/ou de réparation, si au moins un paramètre de processus et/ou au moins un paramètre d'évaluation relatif à l'usinage dépasse une limite prédéterminée.

13. Procédé d'usinage au laser selon l'une des revendications 9 à 12, **caractérisé en ce que** la création d'au moins une proposition pour la modification d'un paramètre de processus est effectuée en fonction des données de capteur enregistrées par le ou au moins un dispositif de capteur (4, 5, 6) et la fourniture de la proposition pour la modification d'un paramètre de processus est effectuée au niveau d'une interface de sortie pour le personnel opérateur par un programme de guidage (3), qui est inclus dans le dispositif de commande (2) du dispositif d'usinage au laser (1).

14. Dispositif d'usinage au laser (1) pour usiner une pièce (11) avec un faisceau laser (10), avec un dispositif de commande (2), le dispositif d'usinage au laser (1) pouvant exécuter des opérations d'usinage au laser de types différents, qui sont commandées respectivement par le dispositif de commande (2) en utilisant des paramètres de processus, dans lequel le dispositif d'usinage au laser comprend un dispositif de classification, dans lequel les opérations d'usinage au laser de types différents sont réparties dans une classification, dans laquelle à chaque opération d'usinage au laser est attribué un jeu de paramètres de processus utilisés dans l'exécution de l'opération d'usinage au laser respective, **caractérisé en ce que** le dispositif de classification est formé de telle sorte que, lors de la définition et/ou de la modification d'au moins un premier paramètre de processus d'une opération d'usinage au laser, au moins un paramètre de processus d'une autre opération d'usinage au laser contenue dans la classification soit automatiquement défini et/ou modifié selon au moins une règle stockée en fonction du premier paramètre de processus.

15. Dispositif d'usinage au laser selon la revendication 14, **caractérisé en ce que** le dispositif d'usinage au laser comprend une interface d'entrée (8) et une interface de sortie (7) pour le personnel opérateur, qui sont connectées au dispositif de commande (2) et au moins un dispositif de capteur (4, 5, 6) pour surveiller l'opération d'usinage au laser et/ou inspecter une pièce usinée (11), le dispositif de commande (2) comprenant un programme de guidage (3) pour guider le personnel opérateur, conçu afin de créer, en fonction des données de capteur enregistrées par le au moins un dispositif de capteur (4, 5, 6), au moins une proposition de modification du au moins d'un premier paramètre de processus et afin de la fournir à l'interface de sortie (7) pour le personnel opérateur.
